# EUROPÄISCHE PATENTSCHRIFT

(11) **EP 1 197 751 B1**
(45) Veröffentlichungstag und Bekanntmachung des Hinweises auf die Patenterteilung: **27.12.2006**
(21) Anmeldenummer: 01124094.2
(22) Anmeldetag: 10.10.2001
(51) Int. Cl.: G01N 27/49

(54) **Amperometrisches Mess- oder Nachweisverfahren und Vorrichtung zu seiner Durchführung**
Amperometric measuring and detection method and apparatus for using the same
Procédé ampérométrique de mesure et de détection et appareil pour son utilisation

(30) Priorität: 14.10.2000 DE 10051089
(43) Veröffentlichungstag der Anmeldung: 17.04.2002
(73) Patentinhaber: Endress + Hauser Conducta Gesellschaft für Mess- und Regeltechnik mbH + Co.KG., D-70839 Gerlingen (DE)
(72) Erfinder: Leibl, Stephanus, 80687 München (DE); Wieland, Christoph, 71083 Herrenberg-Kuppingen (DE)
(74) Vertreter: Andres, Angelika Maria

(56) Entgegenhaltungen:
- EP-A- 0 161 673
- EP-A- 1 006 351
- DE-A- 2 334 473
- US-A- 5 198 771
- W. GÖPEL, J. HESSE, J.N. ZEMEL EDS. : "Sensors, Vol. II" 1991 , VCH , GERMANY XP002269559 * Seite 289 - Seite 294 *

## Beschreibung

Die Erfindung betrifft ein amperometrisches Meß- oder Nachweisverfahren zum Bestimmen des Gehalts einer Substanz in einem Prüfmedium, insbesondere zum Betreiben eines Sauerstoff-Sensors, wobei vorzugsweise eine drei-Elektrodenanordnung mit Arbeitselektrode, Gegenelektrode und Bezugselektrode verwendet wird und die in einem Messzellenelektrolyten gelöste und zu bestimmende Substanz an der Arbeitselektrode reduziert oder oxidiert wird, wobei das Potential der Arbeitselektrode gegenüber der Bezugselektrode (sog. Polarisationsspannung) vorgegeben und ein zwischen Arbeitselektrode und Gegenelektrode fließender Strom als Meßsignal erfasst wird. Dabei wird der Wert der Polarisationsspannung aus einem Bereich der Strom/Spannungskennlinie des Systems gewählt, bei dem der Messstrom im Wesentlichen unabhängig von der Polarisationsspannung ist (diffusionsbestimmter Plateaubereich). In diesem Bereich ist die Spannung zwischen Arbeits- und Gegenelektrode so hoch, dass die zu erfassende Substanz, welche durch eine Membran in die Messzelle hindurchtritt, vollständig zur Arbeitselektrode gelangt und dort umgesetzt wird. Das Messsignal in Form des Messstroms hängt also idealerweise nur von der Konzentration der zu bestimmenden Substanz im Prüfmedium ab. Ferner betrifft die Erfindung eine Vorrichtung zur Durchführung des Verfahrens.

Ein derartiges Mess- oder Nachweisverfahren unter Anwendung einer drei-Elektrodenanordnung ist beispielsweise zum Betreiben eines membranbedeckten elektrochemischen Sauerstoff-Sensors bekannt, bei dem hohe Genauigkeiten im Hinblick auf die Messwertauflösung und Messwertgenauigkeit von deutlich unterhalb 1 % gefordert werden. Derartige Messverfahren sind vielfach vorbeschrieben, insbesondere in der DE 34 18 034 A1. Grundsätzlich ist aber auch die Verwendung einer zwei-Elektrodenanordnung möglich, wobei solchenfalls die Gegenelektrode zugleich als Bezugselektrode eingesetzt wird.

Die Patentschrift EP-1 006 351 offenbart einen Sauerstoffsensor, in dem die angelegte Elektrodenspannung in Abhängigkeit vom gemessenen Strom geregelt wird. Dabei handelt es sich jedoch um einen Festelektrolytensensor und die Regelung dient dazu, den Korrekten Sensorbetrieb innerhalb der Plateauregion zu gewehrleisten.

Bei der Bestimmung z.B. des Sauerstoff-Gehalts wird vorzugsweise eine drei-Elektrodenanordnung innerhalb eines mit einem Messzellenelektrolyten befüllten Elektrolytraums verwendet. Der Elektrolytraum ist gegenüber dem Prüfmedium mittels einer für die zu bestimmende Substanz (Sauerstoff oder ein anderer amperometrisch bestimmbarer Stoff) permeablen Membran abgeschlossen. Die Substanz kann somit aus dem Prüfmedium durch die Membran hindurchtreten und wird im Messzellenelektrolyten des Sensors gelöst. An der Arbeitselektrode findet dann bei geeigneter Anlegung einer Spannung zwischen dieser polarisierbaren Edelmetallelektrode und der Bezugselektrode eine Reduzierung des Sauerstoffs statt, d.h. an der gegenüber der Bezugselektrode kathodisch geschalteten Arbeitselektrode findet die folgende Reaktion statt:

O₂ + 2H₂O + 4e⁻ → 4OH⁻.

Damit die vorstehende Reaktion abläuft, muss aber die Arbeitselektrode auf ein geeignetes Potential gegenüber der Bezugselektrode und der Gegenelektrode gebracht werden; es muss eine Polarisationsspannung geeigneter Größe in Abhängigkeit des Elektrolytsystems und der Elektrode angelegt werden.

Beispielsweise ist bei einer Ag/AgCl-Bezugselektrode ein negatives Potential von wenigstens 611 mV gegenüber der Bezugselektrode bzw. gegenüber dem Chloridionen enthaltenden wässrigen Messzellenelektrolyten erforderlich, damit die vorstehende Reaktion abläuft.

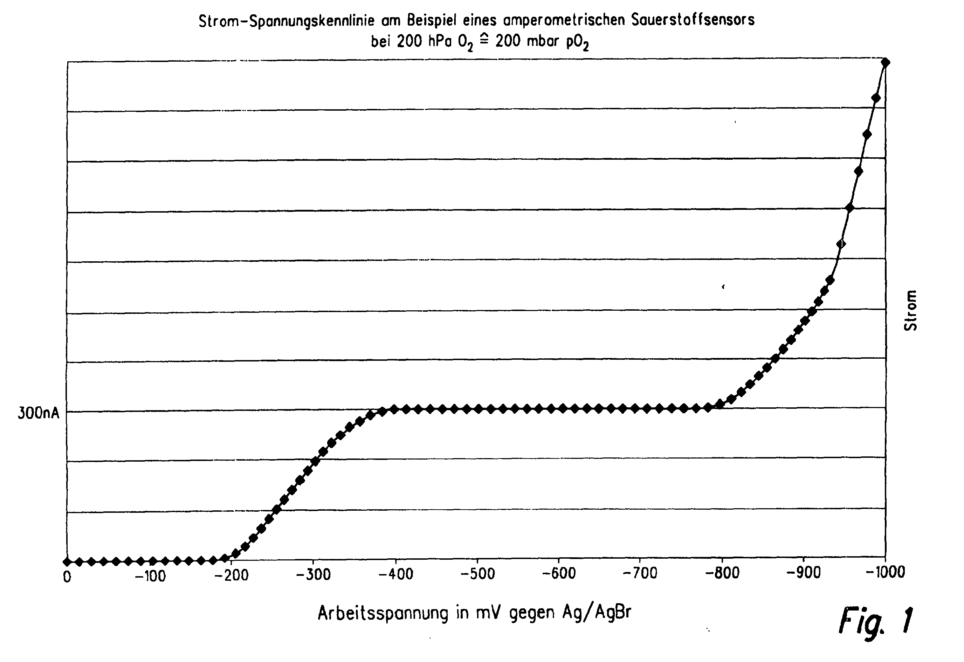

Figur 1 zeigt die ebenfalls bekannte Abhängigkeit des Messstroms von der angelegten Polarisations- oder Arbeitsspannung der Arbeitselektrode gegenüber einer Bezugselektrode vom Typ Ag/AgBr, bei einem Bromidionen enthaltenden wässrigen Elektrolyten.

Der in Figur 1 dargestellte Messstrom wird hervorgerufen durch eine Reduktion des Sauerstoffs an der Arbeitslektrode und einer Abscheidung von Silberbromid an der Gegenelektrode, die ebenfalls in eine Bromid-Lösung als Messzellenelektrolyt eintaucht:

Innerhalb eines ersten Polarisationsspannungsbereichs reicht die angelegte Polarisationsspannung nicht aus, um die O₂-Reduktion zu bewirken. In einem danach anschließenden Bereich steigt der Messstrom stark mit der angelegten Polarisationsspannung an. Je höher die angelegte Spannung, desto besser und in höherem Maße kann in die Messzelle eindiffundierter und im Messzellenelektrolyten gelöster Sauerstoff zu der Arbeitselektrode gelangen und dort umgesetzt werden. In einem sich daran anschließenden Plateaubereich der Polarisationsspannung wird zunächst keine weitere Erhöhung des Messstroms erreicht, da der gesamte in die Messzelle diffundierte Sauerstoff zur Arbeitselektrode gelangt und dort reduziert wird. Bei noch weiterer Erhöhung der Polarisationsspannung findet schließlich die elektrolytische Zersetzung des Wassers statt, und es wird Wasserstoff gebildet. Der hierauf zurückzuführende Anteil des Messstroms ist unerwünscht und fließt unabhängig vom angebotenen Sauerstoffgehalt des Prüfmediums. Man ist deshalb in bekannter Weise bestrebt, amperometrische Mess- und Nachweisverfahren innerhalb eines bestimmten Spannungsbereichs, dem sog. diffusionsbestimmten Plateaubereich der Strom-/Spannungskennlinie des Systems zu wählen.

Eine zunehmende Verarmung des Messzellenelektrolyten an Ionen, welche an der Gegenelektrode zumeist als Edelmetallhalogenid abgeschieden werden, führt zu einer theoretisch wie praktisch begrenzten Standzeit des Sensors. Mit der DE 34 18 034 A1 wird vorgeschlagen, die Standzeit durch Überwachen der Potentialdifferenz zwischen Bezugselektrode und Gegenelektrode zu beobachten und die Veränderung der Potentialdifferenz als Maß für die Beurteilung des Laufzeitzustands des Sensors heranzuziehen.

Bei amperometrischen Verfahren unter Verwendung einer drei-Elektrodenanordnung wird üblicherweise ein Potentiostat verwendet, der die Aufgabe hat, das Potential der Arbeitselektrode gegenüber der Bezugselektrode auf einem konstanten Wert während des gesamten Mess- oder Nachweisbetriebs zu halten. Es wird dabei über eine variierbare Spannungsquelle zwischen Gegenelektrode und Arbeitselektrode ein solches Potential angelegt bzw. eingeregelt, dass zwischen Arbeitselektrode und Referenzelektrode stets die vorbestimmte stromlos gemessene Polarisationsspannung abfällt. Der resultierende Strom zwischen Arbeitselektrode und Gegenelektrode wird dann als Messsignal erfasst und ausgewertet.

Für den Betrieb eines amperometrischen Sensors ist daher die richtige Einstellung der Polarisationsspannung von großer Bedeutung. Durch sie wird bestimmt, in welchem der vorstehend im Zusammenhang mit Figur 1 erwähnten Bereiche der Sensor betrieben wird. Beim Betrieb des Sensors bei niedrigen Polarisationsspannungen, bei denen der Strom stark mit der Spannung ansteigt, kann nicht aller Sauerstoff, der im Messzellenelektrolyten vorhanden ist, an die Arbeitselektrode gelangen und dort umgesetzt werden. Ebenso ist ein Betrieb des Sensors in dem Bereich hoher Polarisationsspannungen, bei dem das Wasser der Elektrolytlösung in dem vorstehend erörterten Beispiel zersetzt wird, nicht möglich. Amperometrische Sensoren werden deshalb üblicherweise in dem Plateaubereich der Strom-Spannungskennlinie des Systems betrieben. In diesem Spannungsbereich ist die Reaktion an der Arbeitselektrode so schnell geworden, dass aller an der Arbeitselektrode ankommender Sauerstoff sofort chemisch reduziert wird. Damit hängt der Betrag des Messstroms nur noch von der Nachlieferung des Sauerstoffs aus dem Prüfmedium durch die Membran in den Elektrolytraum ab.

Es stellt sich daher das Problem, der Bestimmung der richtigen Polarisationsspannung. Wird die Polarisationsspannung am oberen Ende des diffusionsbestimmten Teils gewählt, so besteht die Gefahr, dass schon eine geringfügige Wasserstoffentwicklung einsetzt, die die Messung vor allem kleiner Sauerstoffkonzentrationen durch einen hohen Nullstrom beeinflusst, besonders wenn zusätzlich katalytische Effekte vorhanden sind, wie beispielsweise bei Verwendung einer Arbeitselektrode aus Platin. Wird eine Polarisationsspannung am unteren Ende des Plateaubereichs gewählt, so besteht die Gefahr, dass gerade bei hohen Sauerstoffkonzentrationen die Reaktion an der Oberfläche der Arbeitselektrode zu langsam abläuft. Es kommt zu einem Abknicken der Kennlinie bei hohen Sauerstoffkonzentrationen. Zusätzlich führt eine niedrige Polarisationsspannung zu einer verlängerten Ansprechzeit. Es wird darauf hingewiesen, dass sich die vorstehenden Probleme und Erwägungen auch auf andere als Sauerstoffsensoren übertragen lassen.

Seither wurde ein konstanter Wert der Polarisationsspannung etwa in der Mitte des Plateaübereichs gewählt und während des Messbetriebs konstant eingeregelt.

Hiervon ausgehend liegt der vorliegenden Erfindung die Aufgabe zugrunde, bei einem amperometrischen Mess- oder Nachweisverfahren der vorstehend beschriebenen Art sicherzustellen, dass im Hinblick auf Genauigkeit und Schnelligkeit der Nachweisreaktion stets optimale Bedingungen im Messbetrieb vorliegen.

Diese Aufgabe wird bei einem amperometrischen Mess- oder Nachweisverfahren erfindungsgemäß dadurch gelöst, dass im Mess- oder Nachweisbetrieb das Potential der Arbeitselektrode gegenüber der Bezugselektrode (Polarisationsspannung) in Abhängigkeit von der Größe des Messstroms derart variiert wird, dass bei hohem Messstrom mit einer höheren Polarisationsspannung und bei niedrigem Messstrom mit einer niedrigeren Polarisationsspannung gemessen wird, diese also während des Messbetriebs in Abhängigkeit von der Größe des Messstroms verändert wird.

Entgegen der bestehenden Praxis und Überzeugung, wonach ein Potentiostat während des Mess- oder Nachweisbetriebs stets für eine Konstanthaltung der Polarisationsspannung zwischen Arbeitselektrode und Bezugselektrode zu sorgen hatte, wird mit der vorliegenden Erfindung vorgeschlagen, während des Mess- oder Nachweisbetriebs das Potential quasi kontinuierlich in Abhängigkeit des gerade erfassten Messstroms zu variieren. Bei hohen Messströmen wird mit einer hohen Polarisationsspannung, bei niedrigeren Messströmen mit einer niedrigeren Polarisationsspannung gearbeitet, wobei die Polarisationsspannung nach wie vor innerhalb des Plateau-Bereichs der Strom/Spannungskennlinie des jeweiligen Systems gehalten wird.

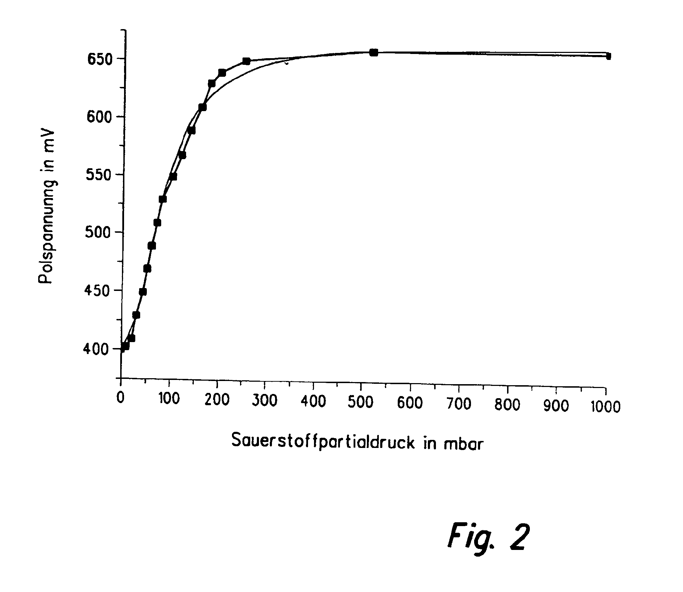

Figur 2 zeigt eine mögliche bevorzugte Abhängigkeit der zu wählenden Polarisationsspannung zwischen Arbeitselektrode und Bezugselektrode vom Sauerstoffpartialdruck, der ja unmittelbar mit dem gerade erfassten Messstrom korreliert ist.

Das erfindungsgemäße Messverfahren zeichnet sich also beispielsweise dadurch aus, dass zur Messung oder zur Aufzeichnung von verhältnismäßig geringen Konzentrationen, also beispielsweise von Sauerstoffpartialdrücken im Bereich unter 50 mbar, mit einer geringen Polarisationsspannung des Bezugselektroden-Systems Ag/AgCl von 400 bis 450 mV gearbeitet wird. D.h. es wird wiederum über eine potentiostatische Vorrichtung eine solche Spannung zwischen Arbeitselektrode und Gegenelektrode gelegt, dass eine vorbestimmte Polarisationsspannung in dem angegebenen Bereich zwischen Arbeitselektrode und Bezugselektrode abfällt. Wenn nun im Zuge des Mess- oder Nachweisbetriebs kontinuierlich oder auch plötzlich der Sauerstoffgehalt in dem Prüfmedium ansteigt, so wird dies einhergehen mit einer entsprechenden Zunahme des Messstroms. Es wird dann gleichzeitig über die potentiostatische Vorrichtung eine höhere Polarisationsspannung zwischen Arbeitselektrode und Bezugselektrode eingeregelt. Im vorgenannten System wird bei Sauerstoffpartialdrücken oberhalb von 200 mbar dann bei einer maximalen Polarisationsspannung von 650 mV gearbeitet.

Das erfindungsgemäße Meßverfahren kann auch bei Verwendung einer zwei-Elektrodenanordnung in vorteilhafter Weise durchgeführt werden. Deshalb wird auch Schutz beansprucht für ein Verfahren mit den Merkmalen des Anspruchs 2.

Es wäre grundsätzlich denkbar, die Festlegung und Einregelung der Größe der Polarisationsspannung in vorbestimmten oder vorbestimmbaren Zeitintervallen durchzuführen. Vorzugszweise wird aber kontinuierlich in Abhängigkeit der Größe des Messstroms ein Sollwert der Polarisationsspannung ermittelt und über einen Regler angelegt.

Es hat sich desweiteren als zweckmäßig erwiesen, den zwischen Arbeitselektrode und Gegenelektrode fließenden Messstrom zur Verarbeitung zu verstärken.

Desweiteren hat sich eine Vorgehensweise als zweckmäßig erwiesen, wonach der Messstrom in eine Spannung, nachfolgend als Messspannung bezeichnet, umgewandelt wird. Anhand dieser Messspannung kann dann der Sollwert der Polarisationsspannung bestimmt werden. Vorzugsweise wird die Messspannung an einen Polarisationsspannungs-Sollwertgenerator gelegt, dessen Ausgangssignal den von der Größe des Messstroms abhängigen Sollwert der Polarisationsspannung bildet, der dann an einen Regler gegeben wird.

Es versteht sich, dass auch eine Sensorvorrichtung mit Messzelle und 3-Elektrodenanordnung mit den Merkmalen des Anspruchs 8 von der Erfindung erfasst ist.

Weitere Merkmale, Einzelheiten und Vorteile der Erfindung ergeben sich aus der nachfolgenden Beschreibung der Erfindung unter Bezugnahme auf die Figuren. In der Zeichnung zeigt:
- Figur 1: eine Strom/Spannungskennlinie am Beispiel eines amperometrischen Sauerstoffsensors;
- Figur 2: Abhängigkeit der Polarisationsspannung vom Messstrom (dargestellt als Sauerstoffpartialdruck)
- Figur 3: eine schematische Darstellung des erfindungsgemäßen Mess- oder Nachweisverfahrens.

Figur 1 zeigt eine Strom/Spannungskennlinie am Beispiel eines amperometrischen Sensors zur Messung des Sauerstoffgehalts in einem Prüfmedium. Aufgetragen ist die Arbeitsspannung in mV gegenüber einer Ag/AgBr-Bezugselektrode in einem Bromidionen enthaltenden Messzellenelektrolyten. Die Kennlinie wurde aufgenommen bei einem Sauerstoffpartialdruck von 200 hPa (200 mbar pO₂). In dem Spannungsbereich bis 200 mV ist die Polarisationsspannung zu gering, um eine Reduktion des im Messzellenelektrolyten gelösten Sauerstoffs an der Arbeitselektrode zu bewirken. Bei weiterer Erhöhung der Spannung findet diese Reaktion dann in zunehmendem Maße statt. Es gelangt mit steigender Spannung ein zunehmender Anteil des in die Messzelle diffundierten Sauerstoffs zur Arbeitselektrode und wird dort umgesetzt. In dem sich daran anschließenden Plateaubereich von ca. 350 bis ca. 800 mV steigt der Messstrom nicht weiter an, da in diesem Spannungsbereich der gesamte in die Messzelle diffundierte Sauerstoff an der Arbeitselektrode reduziert wird.

Oberhalb von 800 mV findet die elektrolytische Zersetzung von Wasser statt.

Figur 2 zeigt eine mögliche Funktion einer adaptiven Anpassung der Polarisierungsspannung in Abhängigkeit des Messstroms, wobei auf der Abszisse der damit direkt korrelierte Sauerstoffpartialdruck in mbar aufgetragen ist. Dies bedeutet, dass zur Durchführung des erfindungsgemäßen Verfahrens während einer Messung kontinuierlich die Polarisationsspannung zwischen Arbeitselektrode und Bezugselektrode zwischen 400 und 650 mV in Abhängigkeit des Sauerstoffpartialdrucks im Prüfmedium variiert wird.

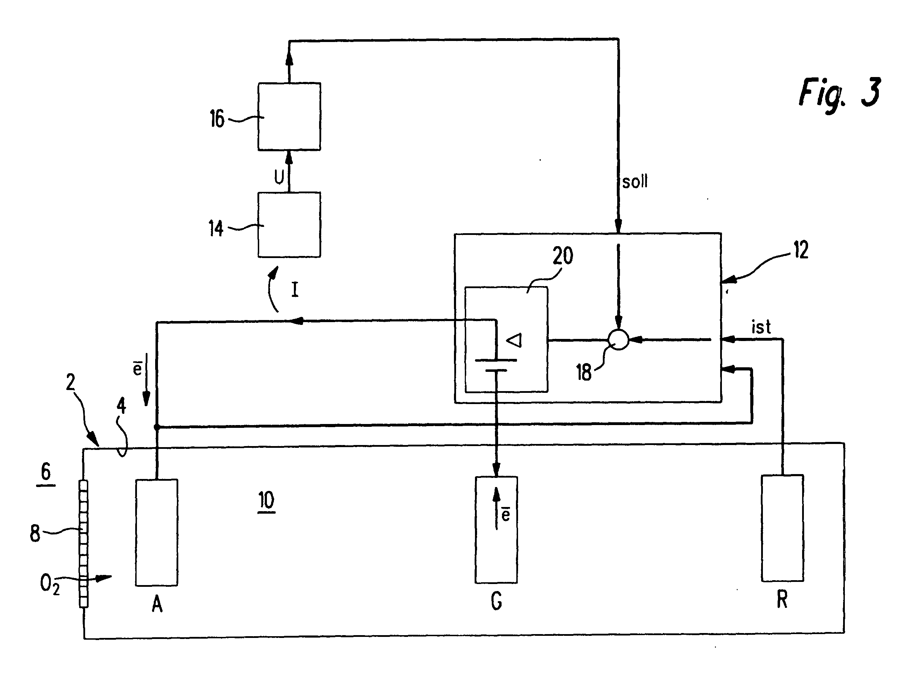

Figur 3 zeigt in schematischer Darstellung den Aufbau einer mit dem Bezugszeichen 2 bezeichneten Messzelle eines amperometrischen Sensors am Beispiel eines Sauerstoffsensors. Die Messzelle umfasst einen Elektrolytraum 4, der von dem zu prüfenden oder zu messenden Medium 6 über eine für Sauerstoff permeable Membran 8 abgetrennt ist und den Messelektrolyten 10 in Form einer Kaliumchloridlösung oder Kaliumbromidlösung aufnimmt. In dem Elektrolytraum 4 ist eine vorzugsweise aus Gold gebildete Arbeitselektrode A, eine Gegenelektrode G und eine Bezugs- oder Referenzelektrode R untergebracht, die über elektrische Durchführungen mit einer lediglich schematisch dargestellten Schaltungseinheit verbunden sind.

Für den Messbetrieb wird die Arbeitselektrode A gegenüber der Gegenelektrode G und der Bezugselektrode R kathodisch geschaltet, so dass dort bei Anliegen einer geeigneten Polarisationsspannung eine Reduktion von Sauerstoff zu OHstattfindet. In gleichem Maße wird an der anodisch geschalteten Silber-Gegenelektrode G Silberchlorid abgeschieden. Der hieraus resultierende Messstrom I wird als Messsignal erfasst.

Bei der 3-Elektrodenanordnung wird über eine insgesamt mit dem Bezugszeichen 12 bezeichnete Reglervorrichtung zwischen Arbeitselektrode und Gegenelektrode eine solche Spannung gelegt, dass zwischen Arbeitselektrode A und Bezugselektrode R eine bestimmte Polarisationsspannung, die stromlos gemessen wird, anliegt.

Im Unterschied zu bekannten Messverfahren wird die Polarisationsspannung zwischen Arbeitselektrode A und Bezugselektrode R aber während eines Messvorgangs nicht konstant gewählt und eingeregelt, sondern sie wird in Abhängigkeit des Messstroms kontinuierlich variiert.

Der momentane Messstrom I wird in einem Strom-SpannungsWandler 14 erfasst, verstärkt und in eine einfach messbare Spannung umgewandelt. Diese Spannung wird an einen Polarisationsspannungs-Sollwertgenerator 16 gegeben, dessen Ausgangssignal der in Abhängigkeit von dem Messsignal einzuregelnden Polarisationsspannung entspricht. Dieses Ausgangssignal wird dann an die Reglervorrichtung 12 gegeben, wo über einen Sollwert/Istwert-Differenzbildner 18 dieser Sollwert der Polarisationsspannung mit der gerade herrschenden Polarisationsspannung zwischen Arbeitselektrode A und Bezugselektrode R verglichen wird. Entsprechend diesem Vergleich wird über einen Ausgangsverstärker 20 die Gegenelektrode angesteuert bis die Polarisationsspannung (Istwert) zwischen Arbeitselektrode A und Bezugselektrode R dem Sollwert entspricht.

Es wurde festgestellt, dass durch die erfindungsgemäße Abkehr von der Lehre, dass die Polarisationsspannung während der Messung stets konstant gehalten werden müsse, der Linearitätsbereich des Messsystems bei bekannten Sensoren und Messverfahren durch die Erfindung um den Faktor 3 ausgedehnt werden konnte.

Während seither ein Nullstrom von etwa 200 pA hingenommen werden musste, konnte durch die adaptive Anpassung der Polarisationsspannung an das Messsignal eine Reduzierung des Nullstroms auf 10 pA erreicht werden.

Es wurde ferner festgestellt, dass man die erforderliche Oberfläche der Arbeitselektrode auf etwa 50 % reduzieren kann, ohne dass sich die Verwendbarkeit des Sensors in irgendeiner Weise reduziert. Angesichts der teuren Materialien für die Arbeitselektrode stellt eine Materialersparnis von 50 % eine erhebliche Kostenersparnis dar.

Auch die Ansprechzeiten des Sensors bei sich stark ändernden Konzentrationen der zu bestimmenden Substanz im Prüfmedium kann durch die erfindungsgemäße Verfahrensführung beträchtlich reduziert werden.

## Patentansprüche

1. Amperometrisches Mess- oder Nachweisverfahren zum Bestimmen der Konzentration einer Substanz in einem Prüfmedium (6), insbesondere zum Betreiben eines Sauerstoff-Sensors, wobei eine drei-Elektrodenanordnung mit Arbeitselektrode (A), Gegenelektrode (G) und Bezugselektrode (R) verwendet wird und die in einem Messzellenelektrolyten (10) gelöste und zu bestimmende Substanz an der Arbeitselektrode (A) reduziert oder oxidiert wird, wobei das Potential der Arbeitselektrode (A) gegenüber der Bezugselektrode (R) (Polarisationsspannung) vorgegeben und ein zwischen Arbeitselektrode (A) und Gegenelektrode (G) fließender Strom (I) als Messsignal erfasst wird, **dadurch gekennzeichnet, dass** im Mess- oder Nachweisbetrieb das Potential der Arbeitselektrode (A) gegenüber der Bezugselektrode (R) (Polarisationsspannung) in Abhängigkeit von der Größe des Messstroms (I) derart variiert wird, dass bei hohem Messstrom mit einer höheren Polarisationsspannung und bei niedrigem Messstrom mit einer niedrigeren Polarisationsspannung gemessen wird.

2. Amperometrisches Mess- oder Nachweisverfahren zum Bestimmen der Konzentration einer Substanz in einem Prüfmedium (6), insbesondere zum Betreiben eines Sauerstoff-Sensors, wobei eine zwei-Elektrodenanordnung mit Arbeitselektrode (A) und Gegenelektrode (G) verwendet wird und die in einem Messzellenelektrolyten gelöste und zu bestimmende Substanz an der Arbeitselektrode (A) reduziert oder oxidiert wird, wobei das Potential der Arbeitselektrode (A) gegenüber der Gegenelektrode (G) (Polarisationsspannung) vorgegeben und ein zwischen Arbeitselektrode (A) und Gegenelektrode (G) fließender Strom (I) als Messsignal erfasst wird, **dadurch gekennzeichnet, dass** im Mess- oder Nachweisbetrieb das Potential der Arbeitselektrode (A) gegenüber der Gegenelektrode (Polarisationsspannung) in Abhängigkeit von der Größe des Messstroms (I) derart variiert wird, dass bei hohem Messstrom mit einer höheren Polarisationsspannung und bei niedrigem Messstrom mit einer niedrigeren Polarisationsspannung gemessen wird.

3. Verfahren nach Anspruch 1 oder 2, **dadurch gekennzeichnet, dass** kontinuierlich in Abhängigkeit der Größe des Messstroms (I) ein Sollwert der Polarisationsspannung ermittelt und über einen Regler (12) angelegt wird.

4. Verfahren nach Anspruch 1,2 oder 3, **dadurch gekennzeichnet, dass** der zwischen Arbeitselektrode (A) und Gegenelektrode (G) fließende Messstrom zur Verarbeitung verstärkt wird.

5. Verfahren nach Anspruch 4, **dadurch gekennzeichnet, dass** der Messstrom (I) in eine Spannung (Messspannung) umgewandelt wird.

6. Verfahren nach Anspruch 5, **dadurch gekennzeichnet, dass** die Spannung an einen Polarisationsspannungs-Sollwertgenerator (16) gelegt wird, dessen Ausgangssignal den von der Größe des Messstroms (I) abhängigen Sollwert der Polarisationsspannung bildet, der an einen Regler (12) gegeben wird.

7. Verfahren nach einem der vorstehenden Ansprüche zur Bestimmung der Konzentration von Sauerstoff in einem Prüfmedium, **dadurch gekennzeichnet, dass** die Polarisationsspannung zwischen Arbeitselektrode und Bezugs- oder Gegenelektrode zwischen 400 mV und 800 mV variiert wird.

8. Vorrichtung zur Durchführung des Verfahrens nach einem der vorstehenden Ansprüche, mit einer zwei- oder drei-Elektrodenanordnung umfassend eine Arbeitselektrode (A), eine Gegenelektrode (G) und gegebenenfalls eine zusätzliche Bezugselektrode (R) sowie eine Messsignal-Erfassungsvorrichtung, **gekennzeichnet durch** einen mit der Messsignal-Erfassungsvorrichtung zusammenwirkenden Polarisationsspannungs-Sollwertgenerator (16), der mit einer Reglervorrichtung (12) verbunden ist, welche die Polarisationsspannung zwischen Arbeitselektrode (A) und Bezugselektrode (R) oder gegebenenfalls Gegenelektrode (G) entsprechend dem vom Messsignal abhängigen Sollwert einregelt, wobei bei hohem Messstrom mit einem höheren Sollwert der Polarisationsspannung und bei niedrigem Messstrom mit einem niedrigeren Sollwert der Polarisationsspannung gemessen wird.

## Claims

1. An amperometric measurement or detection method for determining the concentration of a substance in a test medium (6), especially for operating an oxygen sensor, wherein a three-electrode arrangement with a working electrode (A), a counterelectrode (G) and a reference electrode (R) is used and the substance to be analysed, which is dissolved in an electrolyte (10) in a measuring cell, is reduced or oxidised on the working electrode (A), wherein the potential of the working electrode (A) in relation to the reference electrode (R) (polarisation voltage) is predetermined and a current (I) flowing between the working electrode (A) and the counterelectrode (G) is detected as a measuring signal, **characterised in that**, during a measurement or detection operation, the potential of the working electrode (A) in relation to the reference electrode (R) (polarisation voltage) is varied as a function of the size of the measuring current (I) so that a higher polarisation voltage is used for measurement in the case of a high measuring current and a lower polarisation voltage is used for measurement in the case of a low measuring current.

2. An amperometric measurement or detection method for determining the concentration of a substance in a test medium (6), especially for operating an oxygen sensor, wherein a two-electrode arrangement with a working electrode (A) and a counterelectrode (G) is used and the substance to be analysed, which is dissolved in an electrolyte in a measuring cell, is reduced or oxidised on the working electrode (A), wherein the potential of the working electrode (A) in relation to the counterelectrode (G) (polarisation voltage) is predetermined and a current (I) flowing between the working electrode (A) and the counterelectrode (G) is detected as a measuring signal, **characterised in that**, during a measurement or detection operation, the potential of the working electrode (A) in relation to the counterelectrode (polarisation voltage) is varied as a function of the size of the measuring current (I) so that a higher polarisation voltage is used for measurement in the case of a high measuring current and a lower polarisation voltage is used for measurement in the case of a low measuring current.

3. A method according to claim 1 or 2, **characterised in that** a desired value of the polarisation voltage is continuously determined and applied via a controller (12) as a function of the size of the measuring current (I).

4. A method according to claim 1, 2 or 3, **characterised in that** the measuring current flowing between the working electrode (A) and the counterelectrode (G) is amplified for processing.

5. A method according to claim 4, **characterised in that** the measuring current (I) is converted into a voltage (measuring voltage).

6. A method according to claim 5, **characterised in that** the voltage is applied to a polarisation-voltage desired-value generator (16), the output signal of which forms the polarisation-voltage desired value, which is dependent upon the size of the measuring current (I) and is transmitted to a controller (12).

7. A method according to any one of the preceding claims for determining the concentration of oxygen in a test medium, **characterised in that** the polarisation voltage between the working electrode and the reference or counterelectrode is varied between 400 mV and 800 mV.

8. A device for carrying out the method according to any one of the preceding claims, having a two- or three-electrode arrangement comprising a working electrode (A), a counterelectrode (G) and, optionally, an additional reference electrode (R) and also a measuring-signal detection device, **characterised by** a polarisation-voltage desired-value generator (16) which co-operates with the measuring-signal detection device and is connected to a controller (12) which adjusts the polarisation voltage between the working electrode (A) and the reference electrode (R) or, optionally, the counterelectrode (G) according to the desired value, which is dependent upon the measuring signal, wherein a higher desired value of the polarisation voltage is used for measurement in the case of a high measuring current and a lower desired value of the polarisation voltage is used for measurement in the case of a low measuring current.

## Revendications

1. Procédé ampérométrique de mesure ou de détection destiné à la détermination de la concentration d'une substance dans un produit d'essai (6), notamment pour l'exploitation d'un capteur d'oxygène, procédé au sein duquel est utilisée une configuration à trois électrodes composée d'une électrode de travail (A), d'une contre-électrode (G) et d'une électrode de référence (R) et où la substance à déterminer, dissoute dans un électrolyte de cellule de mesure (10) est réduite ou oxydée sur l'électrode de travail (A), le potentiel de l'électrode de travail (A) par rapport à l'électrode de référence (R) (tension de polarisation) étant prédéfini et un courant (I) circulant entre l'électrode de travail (A) et la contre-électrode (G) étant détecté en tant que signal de mesure, **caractérisé en ce que**, en mode mesure ou en mode détection, le potentiel de l'électrode de travail (A) par rapport à l'électrode de référence (R) (tension de polarisation) est réglé en fonction de la grandeur du courant de mesure (I) de telle manière qu'en présence d'un courant de mesure élevé, la mesure est réalisée avec une tension de polarisation élevée et qu'en présence d'un courant de mesure bas, avec une tension de polarisation basse.

2. Procédé ampérométrique de mesure ou de détection destiné à la détermination de la concentration d'une substance dans un produit d'essai (6), notamment pour l'exploitation d'un capteur d'oxygène, procédé au sein duquel est utilisée une configuration à deux électrodes composée d'une électrode de travail (A) et d'une contre-électrode (G) et où la substance à déterminer, dissoute dans un électrolyte de cellule de mesure est réduite ou oxydée sur l'électrode de travail (A), le potentiel de l'électrode de travail (A) par rapport à la contre-électrode (G) (tension de polarisation) étant prédéfini et un courant (I) circulant entre l'électrode de travail (A) et la contre-électrode (G) étant détecté en tant que signal de mesure, **caractérisé en ce que**, en mode mesure ou en mode détection, le potentiel de l'électrode de travail (A) par rapport à la contre-électrode (G) (tension de polarisation) est réglé en fonction de la grandeur du courant de mesure (I) de telle manière qu'en présence d'un courant de mesure élevé, la mesure est réalisée avec une tension de polarisation élevée et qu'en présence d'un courant de mesure bas, avec une tension de polarisation basse.

3. Procédé selon la revendication 1 ou 2, **caractérisé en ce qu'**une valeur de consigne de la tension de polarisation est continuellement déterminée en fonction de la grandeur du courant de mesure (1) et est délivrée par l'intermédiaire d'un régulateur (12).

4. Procédé selon la revendication 1, 2 ou 3, **caractérisé en ce que** le courant de mesure circulant entre l'électrode de travail (A) et la contre-électrode (G) est amplifié pour le traitement aval.

5. Procédé selon la revendication 4, **caractérisé en ce que** le courant de mesure (I) est converti en une tension (tension de mesure).

6. Procédé selon la revendication 5, **caractérisé en ce que** la tension est délivrée à un générateur de consignes de tension de polarisation (16), dont le signal de sortie constitue la valeur de consigne de la tension de polarisation dépendant de la grandeur du courant de mesure (1), signal qui est délivré à un régulateur (12).

7. Procédé selon l'une des revendications précédentes destiné à la détermination de la concentration d'oxygène dans un produit d'essai, **caractérisé en ce que** la tension de polarisation entre l'électrode de travail et l'électrode de référence ou la contre-électrode est réglée entre 400 mV et 800 mV.

8. Dispositif destiné au déroulement du procédé selon l'une des revendications précédentes, avec une configuration à deux ou trois électrodes composée d'une électrode de travail (A), d'une contre-électrode (G) et éventuellement d'une électrode de référence (R) supplémentaire ainsi que d'un dispositif de détection du signal de mesure, **caractérisé par** un générateur de consignes de tension de polarisation (16) agissant conjointement avec le dispositif de détection du signal de mesure, lequel générateur est relié à un dispositif régulateur (12), qui régule la tension de polarisation entre l'électrode de travail (A) et l'électrode de référence (R) ou éventuellement la contre-électrode selon la valeur de consigne dépendant du signal de mesure, la mesure étant réalisée avec une consigne de tension de polarisation élevée en présence d'un courant de mesure élevé, et avec une consigne de tension de polarisation basse en présence d'un courant de mesure bas.
